# EUROPEAN PATENT APPLICATION

(11) **EP 4 451 511 A1**
(43) Date of publication of application: **23.10.2024**
(21) Application number: 21968077.4
(22) Date of filing: 14.12.2021
(51) Int. Cl.: H02J 13/00, G06F 9/46, H02J 3/38

(54) **VIRTUAL MACHINE PROVISIONING DEVICE, VIRTUAL MACHINE PROVISIONING METHOD, AND PROGRAM**

(71) Applicant: Nippon Telegraph And Telephone Corporation, Chiyoda-ku Tokyo 100-8116 (JP)
(72) Inventor: NAKAMURA, Ryota, Musashino-shi, Tokyo 180-8585 (JP); HARADA, Shigeaki, Musashino-shi, Tokyo 180-8585 (JP)
(74) Representative: Murgitroyd & Company
(86) International application number: PCT/JP2021/046098
(87) International publication number: WO 2023/112160

(57) **Abstract**

A virtual machine allocation apparatus configured to perform allocation of virtual machines to a plurality of bases to which supply of electric power is performed by renewable energy power generation, includes: a prediction unit configured to acquire, for each base, a predicted value of an amount of power generation of renewable energy power generation and a predicted value of power consumption; and an allocation unit configured to repeatedly execute processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group.

## Description

### [Technical Field]

The present invention relates to a technique for allocating virtual machines to a plurality of bases that use electric power generated by renewable energy power generation.

### [Background Art]

In recent years, various network services and applications have been provided by virtual machines (hereinafter referred to as VMs) operating on servers (physical machines) at a plurality of bases (for example, data centers).

In addition, in order to reduce power purchase costs, decarbonize, or the like, in many cases, each base receives power supply from two systems: renewable energy power generation such as solar power generation, and commercial power supplied from an electric power company. Here, such a case is assumed.

In renewable energy power generation, an amount of power supply fluctuates from moment to moment. For that reason, for example, in a case in which an amount of renewable energy supply of a base A is reduced, a VM of the base A is moved to a base B having a margin in the amount of renewable energy supply, and thus renewable energy of the base B can be used without waste, and an amount of power purchase from an electric power company at the base A can be reduced.

NPL 1 discloses a vector-based algorithm for calculating at which base each VM should be disposed in order to use renewable energy at each base as efficiently as possible.

### [Citation List]

### [Non Patent Literature]

[NPL 1] Pape, C., Rieger, S., & Richter, H. (2016). Leveraging Renewable Energies in Distributed Private Clouds. In MATEC Web of Conferences (Vol. 68, p. 14008). EDP Sciences.

### [Summary of Invention]

### [Technical Problem]

However, in the known art disclosed in NPL 1, since an amount of surplus power of the renewable energy for each base is not considered, there is a possibility that the renewable energy may be wasted in some time periods or at some bases.

The present invention has been made in view of the above points, and an object thereof is to provide a technique for minimizing surplus power of renewable energy power generation at a plurality of bases at which supply of electric power is performed by renewable energy power generation.

### [Solution to Problem]

According to the disclosed technique, a virtual machine allocation device (virtual machine allocation apparatus) configured to perform allocation of virtual machines to a plurality of bases to which supply of electric power is performed by renewable energy power generation, the device including:
a prediction unit configured to acquire, for each base, a predicted value of an amount of power generation of renewable energy power generation and a predicted value of power consumption; and
an allocation unit configured to repeatedly execute processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group,
   is provided.

### [Advantageous Effects of Invention]

According to the disclosed technique, it is possible to reduce the surplus power of the renewable energy power generation at the plurality of bases to which the supply of electric power is performed by the renewable energy power generation.

### [Brief Description of Drawings]

[Fig. 1] Fig. 1 is an overall configuration diagram of a system according to an embodiment of the present invention.
[Fig. 2] Fig. 2 is a configuration diagram of a virtual machine allocation device according to an embodiment of the present invention.
[Fig. 3] Fig. 3 is a flowchart for explaining operations according to Example 1.
[Fig. 4] Fig. 4 is a diagram for explaining S101.
[Fig. 5] Fig. 5 is a diagram for explaining S102.
[Fig. 6] Fig. 6 is a diagram for explaining S103.
[Fig. 7] Fig. 7 is a diagram for explaining S103.
[Fig. 8] Fig. 8 is a diagram for explaining S104 to S105.
[Fig. 9] Fig. 9 is a diagram for explaining S106 to S108.
[Fig. 10] Fig. 10 is a flowchart for explaining operations according to Example 2.
[Fig. 11] Fig. 11 is a diagram showing an example of a hardware configuration of the device.

### [Description of Embodiments]

An embodiment of the present invention (the present embodiment) will be described below with reference to the drawings. The embodiment described below is merely an example, and embodiments to which the present invention is applied are not limited to the following embodiment.

### (System Configuration and Operation Overview)

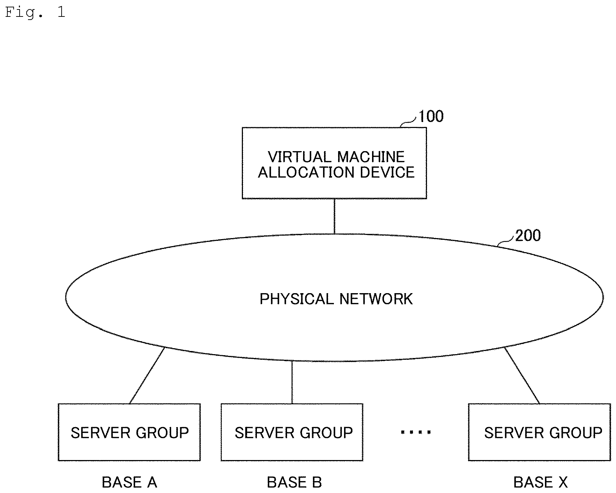

Fig. 1 shows an example of an overall configuration of a system according to the present embodiment. As shown in Fig. 1, a plurality of bases including a server group are connected to a physical network 200. In addition, a virtual machine allocation device 100 (virtual machine allocation apparatus) is connected to the physical network 200.

At each base, commercial power supplied from an electric power company is supplied, and electric power generated by renewable energy power generation is supplied. Also, there may be bases to which only commercial power supplied from an electric power company is supplied or bases to which only electric power of renewable energy power generation is supplied.

Zero or more VMs are installed on each server at each base. Each VM can be moved between bases in accordance with a setting command from the virtual machine allocation device 100. Various existing techniques can be used for moving VMs (which may be referred to as migration).

The virtual machine allocation device 100 derives an arrangement (allocation) of respective VMs to each base in consideration of surplus power of the renewable energy power generation at each base and power consumption of each VM and transmits a setting command for moving VMs to corresponding bases in accordance with results of the allocation processing. The virtual machine allocation device 100 can acquire information needed for allocation calculation (such as an amount of renewable energy power generation, or power consumption of each VM) from each base (or monitoring system, or the like).

The virtual machine allocation device 100 first selects a VM serving as a moving target from among all VMs from the viewpoint of minimizing the surplus power of the renewable energy power generation prior to deriving the arrangement. In deriving the arrangement, an approximation guarantee is obtained by sequentially allocating VMs such that a VM with the highest power consumption is allocated to a base and a time period with the highest surplus power.

### (Device Configuration Example)

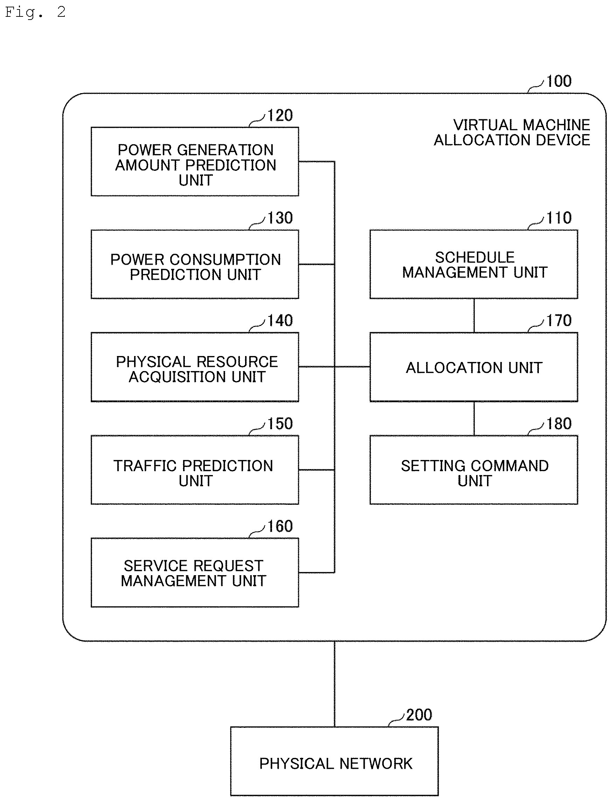

Fig. 2 shows a configuration example of the virtual machine allocation device 100 according to the present embodiment. As shown in Fig. 2, the virtual machine allocation device 100 has a schedule management unit 110, a power generation amount prediction unit 120, a power consumption prediction unit 130, a physical resource acquisition unit 140, a traffic prediction unit 150, a service request management unit 160, an allocation unit 170, and a setting command unit 180. Also, the power generation amount prediction unit 120 and the power consumption prediction unit 130 may be collectively called a prediction unit.

The schedule management unit 110 manages a schedule for executing a control pattern calculated by the allocation unit 170 from an updated state of prediction information and a control time constant of the physical network 200. For example, in a case in which it is known to take 30 minutes for control based on the control time constant, when preferable VM arrangement is desired at a certain time T, the schedule is managed so that the control (such as VM arrangement calculation and command transmission) is started 30 minutes before the time T.

The power generation amount prediction unit 120 predicts an amount of power generation of renewable energy power generation equipment at each base from weather information or the like. The power consumption prediction unit 130 predicts power consumption for each moving load and non-moving load from past power consumption results or the like.

The physical resource acquisition unit 140 acquires and manages information regarding physical resources (CPU capacity of each base, link bandwidth of each link, and the like).

The traffic prediction unit 150 acquires an amount of traffic (an amount of predicted traffic) during the time when virtual network control is performed. The service request management unit 160 manages service requests.

The allocation unit 170 calculates an optimal virtual network control pattern via the procedure described later, for example, in accordance with instructions from the schedule management unit 110.

The setting command unit 180 transmits a virtual network setting command to each physical resource (for example, a server, various communication devices, and the like) to realize the optimal virtual network control pattern calculated by the allocation unit 170.

Also, the virtual machine allocation device 100 may be configured of one device (computer), or may be configured of a plurality of devices. Further, the virtual machine allocation device 100 may have only a function of determining allocation of VMs to bases, and a device other than the virtual machine allocation device 100 may perform a setting command for actual movement of VMs. In addition, for example, the virtual machine allocation device 100 may include the prediction unit and the allocation unit 170, and functions other than these may be provided outside the virtual machine allocation device 100.

### (Example 1)

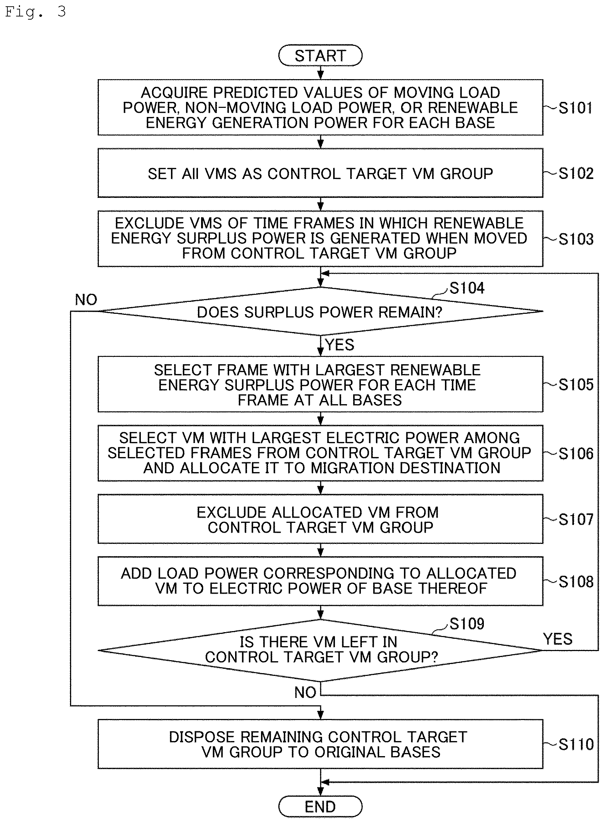

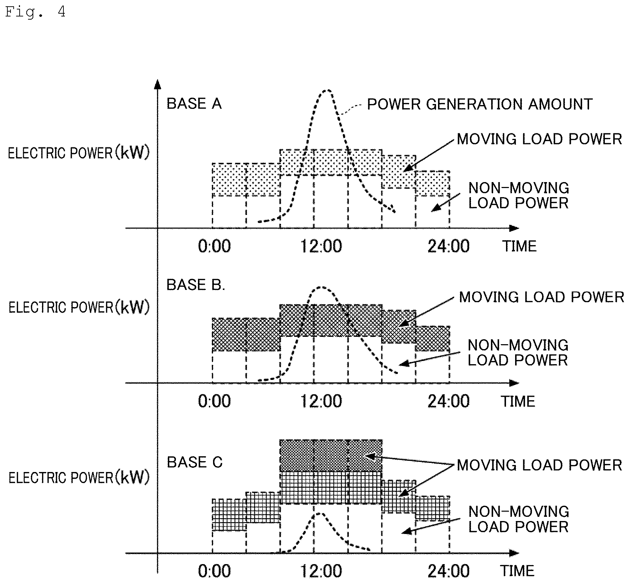

Next, detailed processing performed by the virtual machine allocation device 100 according to Example 1 will be described along the procedure of the flowchart in Fig. 3. Figs. 4 to 9 will be referred to as needed in the description of the procedure.

In the present embodiment, a predetermined time length is divided into a plurality of time periods, and allocation of VMs is performed for each time period. The predetermined time length is, for example, 24 hours. Also, one time period is, for example, 30 minutes. The time period is called a "frame" or "time frame."

Further, in the present embodiment, it is assumed that control for each base is performed at a predetermined time interval (for example, 3 hours), and allocation is performed in units of frames each having a predetermined time length (for example, 24 hours) before the predetermined time for actual control. In the figures used in the following description, for the sake of convenience, frames each having a time length of about 3 to 4 hours are used so that the figures can be easily understood.

### <S101>

In S101 (step 101), the power consumption prediction unit 130 acquires a predicted value of power consumption for a moving load and a predicted value of power consumption for a non-moving load for each base and each frame. In addition, the power generation amount prediction unit 120 acquires a prediction value of generated electric power of renewable energy for each base and each frame. Information of the acquired electric power is stored in a storage unit such as a memory of the virtual machine allocation device 100, read from the memory in subsequent processing, and used for processing.

Further, the moving load is a load that can move power consumption between bases and corresponds to a VM. The non-moving load is a load that cannot move power consumption between bases and corresponds to, for example, air conditioning equipment of a building, or the like. Hereinafter, power consumption corresponding to the moving load will be referred to as moving load power, and power consumption corresponding to the non-moving load will be referred to as non-moving load power. Also, in the following description, unless otherwise specified, electric power is assumed to be a predicted value even if not explicitly stated so.

Fig. 4 shows an example of information regarding a base A, a base B, and a base C acquired in S101. As illustrated, moving load power, non-moving load power, and an amount of power generation are acquired at each base. In Fig. 4, one square in the moving load power indicates moving load power of one VM in that frame. One square in the moving load power can also be regarded as one VM in that frame.

### <S102>

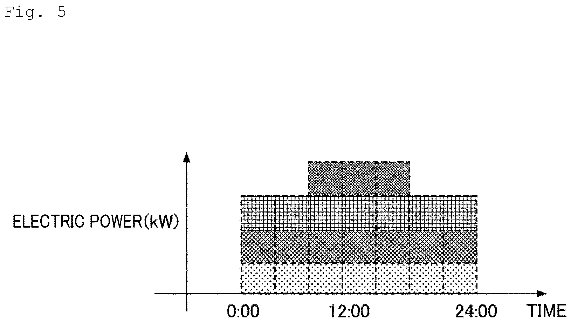

In S102, the allocation unit 170 manages a VM group serving as a source of the moving load power in all bases as a control target VM group. That is, for example, information of the control target VM group is stored in the memory. Fig. 5 shows moving load power for each frame of the control target VM group. In Fig. 5, it can be understood from hatchings whose VM (moving load power) the VM is among the bases A to C shown in Fig. 4.

### <S103>

In S103, the allocation unit 170 excludes, from the control target VM group, VMs of frames that generate (or increase) surplus power of renewable energy power generation when moved, on the basis of a predicted value of the renewable energy power generation.

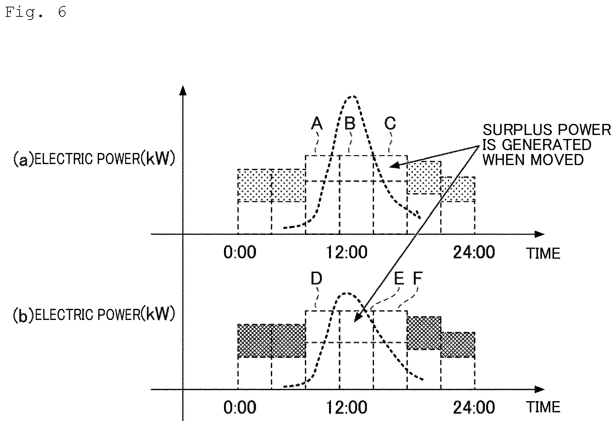

An example will be described with reference to Fig. 6. In the case of Fig. 6 (a), since VMs (moving load power) indicated by A, B, and C respectively use electric power of renewable energy power generation, and thus in a case in which any of these is moved to another base, surplus power of the renewable energy power generation will be generated. The same applies to D, E, and F in (b).

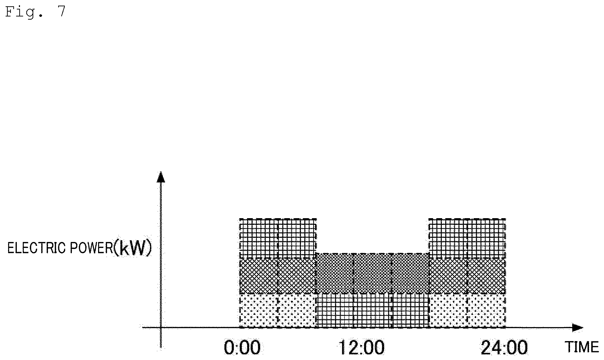

In the case shown in Fig. 4, for the bases A and B, VMs (moving load power) in three central frames correspond to those which generate surplus power of renewable energy power generation when moved, and thus these are excluded from the control target VM group. Fig. 7 shows a control target VM group obtained by excluding these from the entire control target VM group shown in Fig. 5.

### <S104>

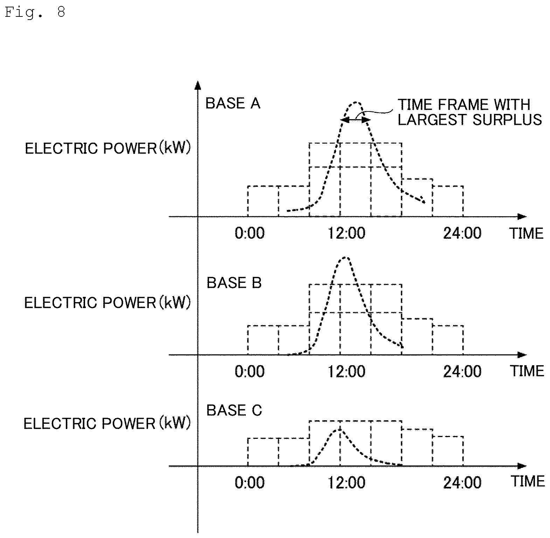

In S104, the allocation unit 170 compares an amount of power generation with "non-moving load power+moving load power" for each base and each frame and determines whether or not there is surplus power. The moving load power here is electric power obtained by adding electric power of the VMs excluded from the control target (that is, electric power of the VMs not moved) and electric power of VMs rearranged in allocation processing, which will be described later. Fig. 8 shows "non-moving load power+moving load power" at this point of time for the bases A and B.

The allocation unit 170 determines that there is surplus power if the "amount of power generation>(non-moving load power+moving load power)."

### <S105>

In S105, the allocation unit 170 selects a base and a frame in which the surplus power of the renewable energy power generation is largest for each frame in all the bases. In the example shown in Fig. 8, since the surplus power in the time frames shown in the figure at the base A is the largest among all the bases and all the frames, this is selected.

### <S106 to S108>

In S106, the allocation unit 170 selects a VM having the largest electric power among the frames (time) selected in S105 from the control target VM group.

In S107, the allocation unit 170 allocates the VM selected in S106 to the base selected in S105 and excludes the VM from the control target VM group. In S108, electric power of the allocated VM is added to power consumption of the base.

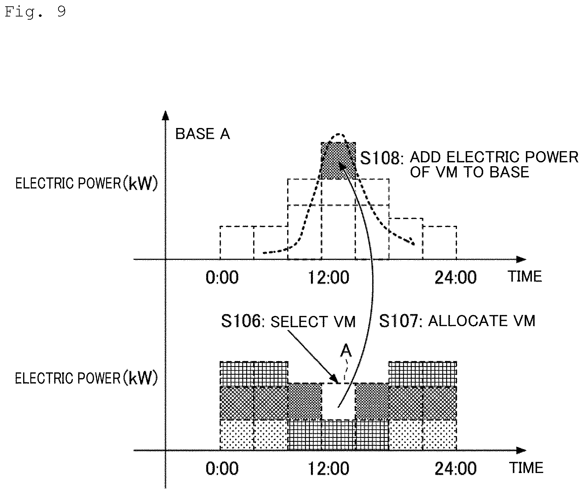

Fig. 9 shows a specific example of S106 to S108. In the example of Fig. 9, the VM having the largest electric power among the frames selected in S105 is the VM indicated by A, which is allocated to the base A, and its electric power is added to the corresponding frame.

### <S104 and S109>

The allocation unit 170 repeats the operations of S105 to S108 until there is no VM in the control target VM group or the surplus power is no longer present at all the bases.

### <S110>

In S110, the allocation unit 170 allocates, to original bases, the VMs (moving load power) in the control target VM group after there is no longer any the surplus power.

After that, when the time of control managed by the schedule management unit 110 comes, the setting command unit 180 transmits a setting command to each base on the basis of allocation results calculated by the allocation unit 170.

### (Example 2)

Next, Example 2 will be described. In Example 2, after arrangement of the control target VM group to the base with surplus power is completed, when remaining VMs of the control target VM group are arranged to the bases, the arrangement is performed to further improve communication quality.

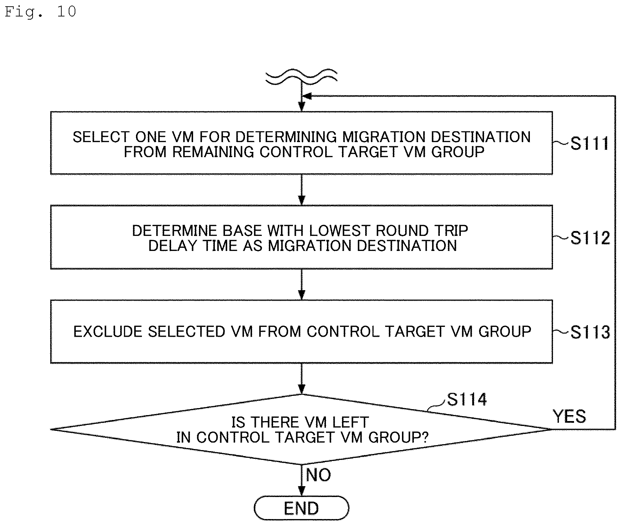

Specifically, in Example 2, S110 in Fig. 3 is replaced with S111 to S114 shown in Fig. 10. S101 to S109 are the same as in Example 1. The content of processing will be described according to the procedure of the flowchart of Fig. 10.

### <S111>

In Sill, the allocation unit 170 randomly selects one VM for determining a migration destination from the remaining control target VM group.

### <S112>

In S112, the allocation unit 170 determines a base having the smallest round trip delay time as an arrangement destination for the VM selected in Sill. The round trip delay time here is, for example, a round trip delay time of communication between a user terminal accessing the VM and the VM. The round trip delay time may be estimated on the basis of a distance between the user terminal and the VM, may be estimated using a measurement value measured in the past for communication between the user terminal and the base, or may be acquired or estimated by other methods.

### <S113>

In S113, the allocation unit 170 excludes the VM for which the arrangement destination has been determined from the control target VM group.

### <S114>

In S114, the allocation unit 170 determines whether or not any VMs remain in the control target VM group, returns to Sill if any VMs remain, and terminates the processing if no VMs remain. The allocation unit 170 repeats the S111 to S114 until there are no VMs left in the control target VM group.

In the above example, the round trip delay time has been used as an example of a communication quality parameter, but the present invention is not limited thereto. For example, migration destinations of VMs may be determined in consideration of server resources (a CPU, a memory, a storage, and the like) of each base and free bands of each link. Alternatively, migration destinations of VMs may be determined by incorporating a plurality of these parameters.

The physical resource acquisition unit 140 acquires server resources, and the traffic prediction unit 150 acquires free bands.

For example, a VM for executing an application for processing large amounts of data is disposed at a base at which remaining capacity of a memory is larger than a threshold, and a VM for executing an application requiring large capacity communication is disposed at a base having a free band larger than a threshold.

### (Hardware Configuration Example)

The virtual machine allocation device 100 can be realized, for example, by causing a computer to execute a program. This computer may be a physical computer or a virtual machine on the cloud.

That is, the virtual machine allocation device 100 can be realized by executing a program corresponding to the processing performed by the virtual machine allocation device 100 using hardware resources such as a CPU and a memory built into a computer. The program can be recorded in a computer-readable recording medium (a portable memory or the like) to be stored or distributed. The program can also be provided through a network such as the Internet or an electronic mail.

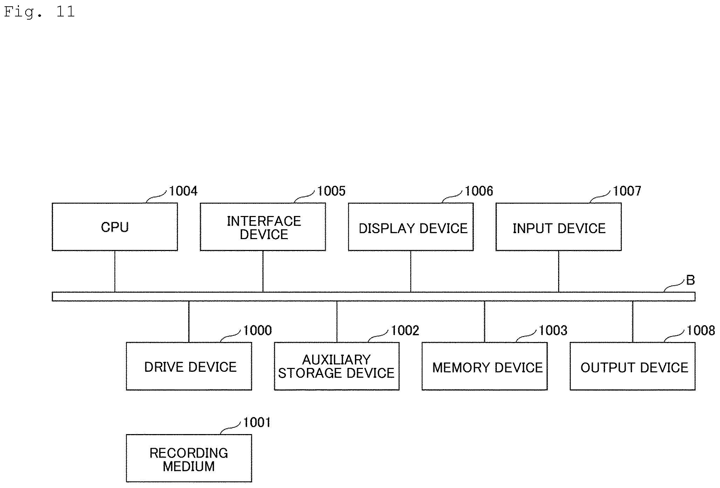

Fig. 11 is a diagram showing a hardware configuration example of the computer. The computer shown in Fig. 11 has a drive device 1000, an auxiliary storage device 1002, a memory device 1003, a CPU 1004, an interface device 1005, a display device 1006, an input device 1007, an output device 1008, and the like, which are connected to each other via a bus BS.

A program for implementing processing in the computer is provided by, for example, a recording medium 1001 such as a CD-ROM or a memory card. When the recording medium 1001 storing the program is set in the drive device 1000, the program is installed from the recording medium 1001 to the auxiliary storage device 1002 via the drive device 1000. However, the program need not necessarily be installed from the recording medium 1001 and may be downloaded from another computer via a network. The auxiliary storage device 1002 stores the installed program and also stores necessary files, data, and the like.

The memory device 1003 reads and stores the program from the auxiliary storage device 1002 when an instruction to start the program is given. The CPU 1004 implements functions relating to the virtual machine allocation device 100 according to the program stored in the memory device 1003. The interface device 1005 is used as an interface for connection to a network or the like. The display device 1006 displays a Graphical User Interface (GUI) and the like according to the program. The input device 1007 is configured of a keyboard and a mouse, buttons, a touch panel, or the like and is used for inputting various operational instructions. The output device 1008 outputs calculation results.

### (Effects of Embodiment)

With the technique according to the present embodiment, it is possible to reduce surplus power of renewable energy at all bases, and to cover more electric power with the renewable energy.

In addition, it will lead to corporate social responsibility (CSR) initiatives by improving a ratio of the renewable energy and can contribute to reducing power purchasing costs from electric power companies.

### (Appendix)

The present specification discloses at least the following virtual machine allocation device, virtual machine allocation method, and program.

### (Item 1)

A virtual machine allocation device configured to perform allocation of virtual machines to a plurality of bases to which supply of electric power is performed by renewable energy power generation, the device including:
a prediction unit configured to acquire, for each base, a predicted value of an amount of power generation of renewable energy power generation and a predicted value of power consumption; and
an allocation unit configured to repeatedly execute processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group.

### (Item 2)

The virtual machine allocation device according to item 1, wherein
the allocation unit sets one or more virtual machines excluding a virtual machine that generates the surplus power of the renewable energy power generation when moved from virtual machines for each time period at the plurality of bases as a control target virtual machine group.

### (Item 3)

The virtual machine allocation device according to item 2, wherein
the allocation unit selects a virtual machine having the largest power consumption among the selected time periods from the control target virtual machine group and allocates the virtual machine to the selected base and time period.

### (Item 4)

The virtual machine allocation device according to any one of items 1 to 3, wherein,
in a case in which there is no surplus power at any base, the allocation unit allocates each virtual machine remaining in the control target virtual machine group to original bases.

### (Item 5)

The virtual machine allocation device according to any one of items 1 to 3, wherein,
in a case in which there is no surplus power at any base, the allocation unit determines bases serving as allocation destinations of each virtual machine remaining in the control target virtual machine group to improve communication quality relating to the virtual machines.

### (Item 6)

A virtual machine allocation method executed by a virtual machine allocation device configured to perform allocation of virtual machines to a plurality of bases to which supply of electric power is performed by renewable energy power generation, the method including:
a prediction step configured to acquire, for each base, a predicted value of an amount of power generation of renewable energy power generation and a predicted value of power consumption; and
an allocation step configured to repeatedly execute processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group.

### (Item 7)

A program configured to cause a computer to function as each unit of the virtual machine allocation device according to any one of items 1 to 5.

Although the embodiment has been described above, the present invention is not limited to the specific embodiment, and various modifications and changes can be made within the scope of the gist of the present invention described in the claims.

### [Reference Signs List]

100 Virtual machine allocation device
110 Schedule management unit
120 Power generation amount prediction unit
130 Power consumption prediction unit
140 Physical resource acquisition unit
150 Traffic prediction unit
160 Service request management unit
170 Allocation unit
180 Setting command unit
200 Physical network
1000 Drive device
1001 Recording medium
1002 Auxiliary storage device
1003 Memory device
1004 CPU
1005 Interface device
1006 Display device
1007 Input device
1008 Output device

## Claims

1. A virtual machine allocation apparatus configured to perform allocation of virtual machines to a plurality of bases to which supply of electric power is performed by renewable energy power generation, the virtual machine allocation apparatus comprising:
a prediction unit configured to acquire, for each base, a predicted value of an amount of power generation of renewable energy power generation and a predicted value of power consumption; and
an allocation unit configured to repeatedly execute processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group.

2. The virtual machine allocation apparatus according to claim 1, wherein
the allocation unit sets one or more virtual machines excluding a virtual machine that generates surplus power of the renewable energy power generation when moved from virtual machines for each time period at the plurality of bases as a control target virtual machine group.

3. The virtual machine allocation apparatus according to claim 2, wherein
the allocation unit selects a virtual machine having the largest power consumption among the selected time periods from the control target virtual machine group and allocates the virtual machine to the selected base and time period.

4. The virtual machine allocation apparatus according to any one of claims 1 to 3, wherein,
in a case in which there is no surplus power at any base, the allocation unit allocates each virtual machine remaining in the control target virtual machine group to original bases.

5. The virtual machine allocation apparatus according to any one of claims 1 to 3, wherein,
in a case in which there is no surplus power at any base, the allocation unit determines bases serving as allocation destinations of each virtual machine remaining in the control target virtual machine group to improve communication quality relating to the virtual machines.

6. A virtual machine allocation method executed by a virtual machine allocation apparatus configured to perform allocation of virtual machines to a plurality of bases to which supply of electric power is performed by renewable energy power generation, the method comprising:
a prediction step configured of acquiring, for each base, a predicted value of an amount of power generation of renewable energy power generation and a predicted value of power consumption; and
an allocation step of repeatedly executing processing of selecting a base and a time period in which surplus power of the renewable energy power generation is maximized within a predetermined time length divided into a plurality of time periods at the plurality of bases, allocating a virtual machine selected from a control target virtual machine group including one or more movable virtual machines to the selected base and time period, and excluding the allocated virtual machine from the control target virtual machine group.

7. A program configured to cause a computer to function as each unit of the virtual machine allocation apparatus according to any one of claims 1 to 5.
